# EUROPÄISCHE PATENTSCHRIFT

(11) **EP 2 052 999 B1**
(45) Veröffentlichungstag und Bekanntmachung des Hinweises auf die Patenterteilung: **17.11.2010**
(21) Anmeldenummer: 08450162.6
(22) Anmeldetag: 22.10.2008
(51) Int. Cl.: B65G 53/52

(54) **Umlenkführung ein mit Hilfe eines Luftstroms gefördertes Kunststoffgranulat**
Baffle tube for a plastic granulate transported by air flow
Déflecteur dans un convoyeur à air pour granulés

(30) Priorität: 23.10.2007 AT 17142007
(43) Veröffentlichungstag der Anmeldung: 29.04.2009
(73) Patentinhaber: ECON Maschinenbau und Steuerungstechnik Gmbh, 4616 Weisskirchen/Traun (AT)
(72) Erfinder: Hehenberger, Gerhard, 4622 Eggendorf (AT)
(74) Vertreter: Hübscher, Helmut

(56) Entgegenhaltungen:
- BE-A- 415 794
- FR-A- 2 238 656
- GB-A- 731 646
- GB-A- 191 511 590
- NL-A- 7 805 843
- US-A- 1 681 381
- US-A- 1 724 625
- US-A- 2 310 265
- US-A- 4 116 491

## Beschreibung

Die Erfindung bezieht sich auf eine Umlenkführung für ein mit Hilfe eines Luftstroms gefördertes Kunststoffgranulat mit zwei unter einem Winkel zueinander geneigten, geraden Förderrohren und wenigstens einem Verbindungsrohr zwischen den beiden Förderrohren.

Üblicherweise werden Kunststoffe granuliert, indem die Kunststoffschmelze in Form von Kunststoffsträngen durch eine Lochplatte gedrückt wird, die mit einem zur Lochscheibe koaxialen Rotor zusammenwirkt, der mit Granuliermessern bestückt ist, sodass die aus der Lochplatte in ein Kühlwasser austretenden Kunststoffstränge geschnitten werden und das im Kühlwasser erstarrende Granulat mit dem Kühlwasser weitergefördert wird. Neben einer solchen Unterwassergranulierung ist es außerdem bekannt (WO 93/15892 A1), den Granulierkopf in einem Gehäuse vorzusehen, das von einem Kühl- und Förderluftstrom durchströmt wird, um insbesondere temperaturempfindliche Kunststoffarten granulieren zu können. Dieser Kühl- und Förderluftstrom erfasst die von den rotierenden Messern abgeschleuderten Granulatteilchen und trägt sie in das anschließende Förderrohr aus. Da zur Vermeidung eines nachteiligen Einflusses der Schwerkraft auf die Granulatförderung aus dem Gehäuse die Förderluft von unten nach oben durch das Gehäuse geleitet wird, ist es im Allgemeinen notwendig, für den Gutstrom aus dem Gehäuse eine Umlenkführung vorzusehen. Diese Umlenkführung wird üblicherweise durch einen Rohrbogen zwischen zwei geraden Förderrohren gebildet, wobei die Gefahr einer Klumpenbildung besteht, weil das entstehende Granulat im Förderluftstrom nicht ausreichend abgekühlt wird, um ohne Verklumpung entlang der Außenwand des Rohrbogens in Richtung des weiterführenden, ablaufseitigen Förderrohres umgelenkt zu werden.

Das Dokument BE 415 794 A1 offenbart eine Umlenkführung gemäß dem Oberbegriff des Anspruchs 1.

Der Erfindung liegt die Aufgabe zugrunde, eine verbesserte derartige Umlenkführung anzugeben.

Die gestellte Aufgabe wird durch die Umlenkführung des Anspruchs 1 gelöst.

Durch das Einblasen zusätzlicher Förderluft in das Verbindungsrohr wird das Umlenken des Kunststoffgranulats unterstützt, weil dieser zusätzliche Förderluftstrom die Granulatteilchen mitreißt, bevor sie an die hinsichtlich der Umlenkführung äußere Wand des Verbindungsrohres anschlagen können. Die Granulatteilchen werden daher weitgehend ohne Wandberührung durch das Verbindungsrohr geführt, sodass eine wesentliche Ursache für die Klumpenbildung ausgeschaltet werden kann. Dazu kommt, dass durch die zusätzliche Förderluft die Granulatkühlung verbessert und damit die Neigung des Kunststoffgranulats zur Klumpenbildung verringert wird, was zu einer klumpenfreien Einleitung des Fördergutes in das ablaufseitige Förderrohr beiträgt, zumal die durch die Zusatzluft bedingte Beschleunigung des Gutstroms zu einer Abstandsvergrößerung der Granulatteilchen in Förderrichtung führt. Erfindungsgemäß besitzt das in Förderrichtung ablaufseitige Förderrohr einen entgegen der Förderrichtung durch die Einmündung des Verbindungsrohres verlängerten Gebläseanschluss, so dass auch im Bereich der Einmündung des Verbindungsrohres in das weiterführende Förderrohr eine Wandberührung des Kunststoffgranulats ausgeschlossen werden kann.

Dies gilt insbesondere für eine Konstruktion, bei der das Verbindungsrohr einen geraden Rohrschuss umfasst, der einen entgegen der Förderrichtung über die Einmündung des zulaufseitigen Förderrohres verlängerten Gebläseanschluss aufweist. Die Gutumlenkung erfolgt unter diesen Voraussetzungen im Einmündungsbereich des zulaufseitigen Förderrohres in den geraden Rohrschuss des Verbindungsrohres, in das koaxial Förderluft eingeblasen wird, sodass der aus dem zulaufseitigen Förderrohr eingeblasene Gutstrom durch die zusätzliche Förderluft in Richtung des geraden Rohrschusses umgelenkt wird, ohne die Rohrwandung dieses Rohrschusses zu berühren.

Damit einerseits das Kunststoffgranulat während seiner Förderung besser gekühlt und zusätzlich beschleunigt werden kann, um den gegenseitigen Abstand der Granulatteilchen in Förderrichtung zu vergrößern, kann das zulaufseitige Förderrohr wenigstens eine Injektoröffnung zum Ansaugen von Zusatzluft aufweisen. Die zusätzliche Förderluft kann nach der Umlenkung zumindest teilweise wieder aus dem Gutstrom ausgeschieden werden. Zu diesem Zweck können das Verbindungsrohr und/oder das ablaufseitige Förderrohr mit einem Locheinsatz zur Abscheidung von Förderluft versehen werden.

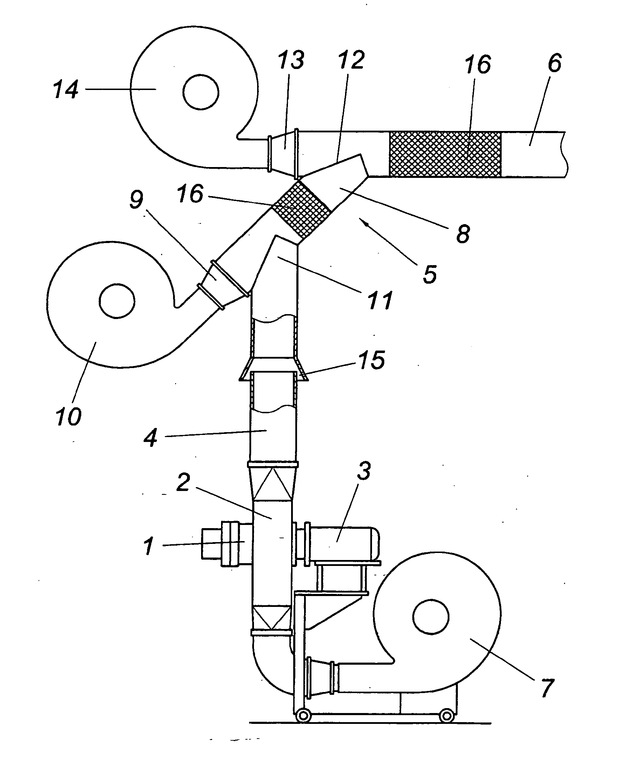

In der Zeichnung ist der Erfindungsgegenstand beispielsweise dargestellt, und zwar wird eine erfindungsgemäße Umlenkführung für ein mit Hilfe eines Luftstroms gefördertes Kunststoffgranulat in einer vereinfachten Seitenansicht gezeigt.

Gemäß dem dargestellten Ausführungsbeispiel wird über einen nicht dargestellten Extruder schmelzflüssiger Kunststoff zu einem Granulierkopf 1 gefördert, der in herkömmlicher Weise eine Lochplatte zur Ausbildung von Kunststoffsträngen aufweist, die mit Hilfe eines mit Granuliermessern bestückten Rotors in einem Gehäuse 2 zu einem Granulat geschnitten werden. Der Antrieb des Rotors erfolgt mit Hilfe eines Motors 3.

Die vom Rotor abgeschleuderten Granulatteilchen, werden mit Hilfe eines durch das Gehäuse 2 geförderten Förderluftstroms aus dem Gehäuse 2 ausgetragen, das an ein zulaufseitiges Förderrohr 4 einer Umlenkführung 5 angeschlossen ist, deren ablaufseitiges Förderrohr mit 6 bezeichnet wird. Der durch das Gehäuse 2 geführte, durch ein entsprechendes Gebläse 7 erzeugte Förderluftstrom bewirkt eine Kühlung der Granulatteilchen. Diese Kühlung reicht jedoch im Allgemeinen nicht zu einer weitgehenden Erstarrung der Granulatteilchen aus, sodass eine Verklumpung des Kunststoffgranulats während der Umlenkung im Bereich der Umlenkführung 5 nicht ausgeschlossen werden kann, wenn die Granulatteilchen unter einer Berührung der hinsichtlich der Umlenkführung 5 äußeren Wand des Verbindungsrohres 8 vom zulaufseitigen Förderrohr 4 zum ablaufseitigen Förderrohr 6 bewegt wird.

Um eine Verklumpung der Granulatteilchen außerhalb des Gehäuses 2 zu vermeiden, weist das vorzugsweise als gerader Rohrschuss ausgebildete Verbindungsrohr 8 einen Gebläseanschluss 9 für ein Gebläse 10 auf, der in einer geraden Verlängerung des Verbindungsrohres 8 entgegen der Förderrichtung über die Einmündung 11 des zulaufseitigen Förderrohres 4 hinaus vorgesehen ist. In ähnlicher Weise ist das ablaufseitige Förderrohr 6 entgegen der Förderrichtung über die Einmündung 12 des Verbindungsrohres 8 hinaus verlängert und mit einem Anschluss 13 für ein Zusatzgebläse 14 versehen, sodass der der Umlenkführung 5 durch das zulaufseitige Führungsrohr 4 zuströmende Gutstrom zunächst durch die zusätzliche Förderluft des Gebläses 10 in Richtung des geraden Rohrschusses des Verbindungsrohres 8 beschleunigt wird, bevor eine weitere Beschleunigung im Bereich der Einmündung 12 über die Zusatzluft des Gebläses 14 erfolgt. Diese Beschleunigung der Granulatteilchen bewirkt eine Umlenkung der Granulatteilchen in Richtung der jeweils weiterführenden Rohrabschnitte 8 bzw. 6, ohne Gefahr zu laufen, dass die Granulatteilchen einer eine Klumpenbildung fördernden Wandberührung unterworfen werden. Außerdem vergrößert sich der gegenseitige Abstand der Granulatteilchen in Förderrichtung.

Damit der Abstand der Granulatteilchen in Förderrichtung bereits vor der Umlenkführung 5 vergrößert werden kann, kann das zulaufseitige Förderrohr 4 mit wenigstens einer Injektoröffnung 15 versehen werden, über die aufgrund der Injektorwirkung des Förderluftstroms Außenluft angesaugt wird, was einerseits zu einer Beschleunigung des Gutstroms im Förderrohr 4 und anderseits zu einer verbesserten Führung des Kunststoffgranulates führt.

Um zumindest einen Teil der zusätzlich angesaugten bzw. eingeblasenen Förderluft wieder auszuscheiden, können das Verbindungsrohr 8 und das ablaufseitige Förderrohr 6 mit einem Locheinsatz 16 versehen werden, sodass der Gutstrom im ablaufseitigen Förderrohr 6 mit einer verminderten Förderluftmenge weitergefördert wird, was günstigere Abscheidebedingungen für das Kunststoffgranulat aus dem Förderluftstrom schafft. Diese Abscheidung des Kunststoffgranulats aus dem Förderluftstrom erfolgt üblicherweise mit Hilfe eines Zyklonabscheiders.

Die Erfindung ist selbstverständlich nicht auf das dargestellte Ausführungsbeispiel beschränkt. So könnte das Verbindungsrohr 8 an Stelle eines geraden Rohrschusses einen die beiden Förderrohre 4 und 6 verbindenden Rohrbogen aufweisen, an den der Gebläseanschluss 9 tangential angesetzt ist, um zusätzliche Förderluft in das Verbindungsrohr 8 einzublasen und eine Wandberührung des Kunststoffgranulats zur Vermeidung einer Verklumpung zu verhindern. Das ablaufseitige Förderrohr 6 kann dabei mit einem Gebläseanschluss 13 versehen sein, was aber keinesfalls zwingend ist.

## Patentansprüche

1. Umlenkführung (5) für ein mit Hilfe eines Luftstroms gefördertes Kunststoffgranulat mit zwei unter einem Winkel zueinander geneigten geraden Förderrohren (4, 6) und wenigstens einem Verbindungsrohr (8) zwischen den beiden Förderrohren (4, 6), wobei das Verbindungsrohr (8) einen Gebläseanschluss (9) zum Einblasen zusätzlicher Förderluft in Förderrichtung aufweist, **dadurch gekennzeichnet, dass** das in Förderrichtung ablaufseitige Förderrohr (6) einen entgegen der Förderrichtung über die Einmündung (12) des Verbindungsrohres (8) verlängerten Gebläseanschluss (13) besitzt.

2. Umlenkführung nach Anspruch 1, **dadurch gekennzeichnet, dass** das Verbindungsrohr (8) einen geraden Rohrschuss umfasst, der einen entgegen der Förderrichtung über die Einmündung (11) des zulaufseitigen Förderrohres (4) verlängerten Gebläseanschluss (9) aufweist.

3. Umlenkführung nach einem der Ansprüche 1 bis 2, **dadurch gekennzeichnet, dass** das zulaufseitige Förderrohr (4) wenigstens eine Injektoröffnung (15) zum Ansaugen von Zusatzluft aufweist.

4. Umlenkführung nach einem der Ansprüche 1 bis 3, **dadurch gekennzeichnet, dass** das Verbindungsrohr (8) und/oder das ablaufseitige Förderrohr (6) mit einem Locheinsatz (16) zur Abscheidung von Förderluft versehen sind.

## Claims

1. Deflection guide (5) for a synthetic material granulate which is conveyed with the aid of an air flow and has two straight feed pipes (4, 6) which are inclined at an angle with respect to each other and at least one connection pipe (8) between the two feed pipes (4, 6), wherein the connection pipe (8) comprises a blower connection (9) for injecting additional feed air in the direction of conveyance, **characterised in that** the feed pipe (6) which is on the outlet-side in the direction of conveyance comprises a blower connection (13) which is extended in the direction opposite the direction of conveyance by the branch (12) of the connection pipe (8).

2. Deflection guide as claimed in claim 1, **characterised in that** the connection pipe (8) comprises a straight pipe section which comprises a blower connection (9) which is extended in the direction opposite the direction of conveyance by the branch (11) of the inlet-side feed pipe (4).

3. Deflection guide as claimed in any one of claims 1 to 2, **characterised in that** the inlet-side feed pipe (4) comprises at least one injector opening (15) for aspirating additional air.

4. Deflection guide as claimed in any one of claims 1 to 3, **characterised in that** the connection pipe (8) and/or the outlet-side feed pipe (6) are provided with a perforated insert (16) for separating feed air.

## Revendications

1. Déflecteur (5) pour un granulé de matière synthétique transporté à l'aide d'un écoulement d'air, avec deux tubes de transport (4, 6) rectilignes, inclinées sous un certain angle l'un par rapport à l'autre, et au moins un tube de liaison (8) entre les deux tubes de transport (4, 6), le tube de liaison (8) présentant un raccordement à une soufflerie (9) pour insuffler de l'air de transport supplémentaire dans la direction de transport, **caractérisé en ce que** le tube de transport (6), situé côté aval en observant dans le sens de transport, comprend un raccordement à une soufflerie (13) prolongé à l'encontre du sens de transport, une fois passée l'embouchure (12) du tube de liaison (8).

2. Déflecteur selon la revendication 1, **caractérisé en ce que** le tube de liaison (8) comprend un raccordement tubulaire rectiligne, présentant un raccordement à une soufflerie (9), prolongé à l'encontre du sens de transport, une fois passée l'embouchure (11) du tube de transport (4) situé côté arrivée.

3. Déflecteur selon l'une des revendications 1 à 2, **caractérisé en ce que** le tube de transport (4) situé côté arrivée présente au moins une ouverture d'injecteur (15) pour aspirer de l'air additionnel.

4. Déflecteur selon l'une des revendications 1 à 3, **caractérisé en ce que** le tube de liaison (8) et/ou le tube de transport (6) situé côté aval est/sont muni(s) d'un insert perforé (16), pour la séparation de l'air de transport.
